# EUROPEAN PATENT APPLICATION

(11) **EP 0 735 380 A1**
(43) Date of publication of application: **02.10.1996**
(21) Application number: 95830129.3
(22) Date of filing: 31.03.1995
(51) Int. Cl.: G01S 1/00, G08G 1/137, G06T 17/50, G01C 21/22, G09B 29/10

(54) **A system for the radiolocation and radionavigation of mobile means**

(71) Applicant: A.T. SYSTEM S.p.A., 38068 Rovereto (Trento) (IT)
(72) Inventor: Salvaterra, Mariano, I-36068 Rovereto(Trento) (IT)
(74) Representative: Lanzoni, Luciano

(57) **Abstract**

A system for the radiolocation and radionavigation of a mobile station typically comprising a mobile interface circuit connected with satellite sensing equipment installed on board a vehicle, a mobilememory in which to store map data, a microprocessor controller, and a transmitter linking the mobile station with a base station, an essential feature of which is that it will convert automatically to the various map representations used in different countries in the event of the vehicle crossing over national frontiers; the system can also be utilized in train data transmission and paging systems, and allows encryption of the information handled.

## Description

The present invention relates to a system for the radiolocation and radionavigation of mobile means comprising mobile on-board equipment linked by way of transmission media with a fixed or base station.

Systems for the radiolocation of mobile stations are important to operators of vehicles, especially large fleets of vehicles, as also is the facility of providing navigational aids for such mobile stations.

This is particularly true in the case of transport companies, with usefulness accompanying necessity, not to mention the movement of railway trains and other types of vehicles.

Given that the reference system used for locating mobile stations consists in a constellation of 24 satellites revolving around the earth in 12 hour orbits at a distance of 20,200 km from datum, the need arises for a system of coordinates by means of which to fix the approximate position of the mobile station on the earth.

One system adopted currently for this same purpose, known as GPS (Global Positioning System), uses the constellation of satellites to generate reference coordinates appearing as geocentric type grids of substantially square outline; with GPS, in effect, the terrestrial globe is assumed to be a geoid as determined by WGS 84 (World Geodetic System 1984).

This type of representation conflicts with those utilized in long-established methods of terrestrial cartography, which are not geocentric, but consist invariably in projections of a sphere onto a plane or of an ellipsoid onto a plane.

Since the time of Ptolemy, then of Mercator in the XVI century, individual cartographers have adopted their own type of projection in order to obtain the best possible adaptation of the finished map to the natural features of the territory represented.

This has resulted in a variety of representations, European and worldwide, each adapted as closely as possible to the particular physical characteristics of the territory occupied by the relative State. Needless to say, not all States have adopted the same cartography systems: Italy, for example, uses an official system known as Gauss-Boaga, of which the point of origin is at Monte Mario di Roma and the extremities are situated respectively in the northern regions and toward Sicily, where the more significant variations of the relative coordinates correspondingly occur.

There is a problem with such a situation, however, which arises whenever a mobile station leaves one country and enters another. In order to locate the station, in effect, the relative system must adapt automatically to the cartographic representation of the new country while continuing to refer to the coordinates defined by the satellite constellation of the GPS.

This type of drawback had never been effectively overcome in any former era, since movements were defined within the compass of limited regions, and satellite systems were not exploited as universally as today for radionavigation purposes.

But now, with the advent of large transport systems operating across national frontiers, the need for vehicles to be pin-pointed exactly on highways and motorways has become more and more pressing, both for operational reasons (navigation aids), and for reasons of safety (warning and alarm functions).

Similarly, the need exists for sonic suitable means of detecting any deviation from established routes, by reference to the geographical area across which a mobile station is in transit, so that both the driver and the base station can be informed when a vehicle strays from its itinerary.

This is required especially in the case of heavy goods vehicles, to the end of avoiding any needless extension of distances, accidental or otherwise, which if repeated and significant could result in extremely prohibitive transport costs.

The same criterion can also be widened and applied to individuals travelling across a given territory, albeit with paging alarm functions in view rather than those of location and navigation. Existing systems do not recognize different map projections, however, and are limited to especially restricted regional areas; neither are such systems suitable for personal use.

In short, given the current state of the art, there is no system capable, in real time, of performing a valid map survey, or of adapting to the official cartography system of a region while in transit through the region.

In existing systems, moreover, any deviations from set routes are detected only through the perception of the driver.

Accordingly, the object of the present invention is to overcome substantially all of the drawbacks and the limitations described above, by realizing and providing a system for the radiolocation and radio navigation of mobile means such as will perform certain functions automatically, and without regard to the intentions of a driver, namely the reliable detection of any transit across national frontiers (identifying changes of territory by reference to the systems of map representation adopted in the single countries entered), also the signalling of any deviation from established routes and of any alarm conditions of whatever nature (for reasons of safety), and which can be adapted for personal use as a paging alarm (to prevent kidnapping, etc.).

The stated object is fully realized, as indeed are many others that will emerge more clearly from the following description, in a system for the radio location and radionavigation of mobile means as characterized in the appended claims.

The invention will now be described in detail, by way of example, with the aid of the accompanying drawings, in which:
- fig 1 is the block diagram of on-board equipment forming part of the system disclosed;
- fig 2 is the block diagram of a section of circuit designed to connect up with transmitting equipment embodied separately from the on-board equipment of fig 1;
- fig 3 is the block diagram of an on-board terminal located in the cab or passenger compartment of a vehicle and forming part of the system disclosed;
- fig 4 illustrates a railway train data interface incorporated into the on-board equipment of fig 1;
- fig 5 illustrates a circuit module associated with the on-board equipment of fig 1 and designed for use in conjunction with merchandise security packs according to the invention;
- fig 6 shows the block diagram of a transmitter receiver incorporated into a merchandise security pack as in fig 5;
- fig 7 illustrates a display that might be fitted to the on-board terminal of fig 3;
- fig 8 is the block diagram of part of a dedicated obliterator circuit operating in conjunction with the on-board equipment of fig 1;
- fig 9 shows the program flowchart relative to a geographical and geodetic coordinates conversion procedure utilized in the system disclosed;
- fig 10 is the diagram of a route between a first point and a second point, indicating the method by which permissible deviation limits are determined according to the present invention;
- fig 11 shows the program flowchart relative to a procedure performed by the system disclosed to the end of detecting deviation from a route, applying the method indicated in fig 10;
- fig 12 shows the program flowchart relative to a procedure for the optimization of data storage as performed by the system disclosed;
- fig 13 shows a program flowchart relative to the operation and the dynamic allocation of memories installed in the on-board equipment of the system disclosed;
- fig 14 illustrates a procedure for managing the encryption of data passed between various hardware structures making up the system disclosed;
- fig 15 shows a program flowchart relative to the management of encryption in the system disclosed;
- fig 16 illustrates diagramatically how temperature is controlled in the system disclosed;
- fig 17 is a diagram illustrating an intelligent energy saving feature of the system disclosed;
- fig 18 is a program flowchart relative to a method of forcing precision limits in the system according to the present invention;
- fig 19 is a program flowchart illustrating how position data is digitized automatically for use by the system disclosed, using a vector algorithm;
- fig 20 shows a program flowchart relative to the control of a miniaturized TV camera operating in conjunction with the on-board equipment of fig 1;
- fig 21 is the schematic representation of a casing designed to contain a personal portable appliance of the equipment of fig 1;
- fig 22 is the block diagram of a paging system according to the present invention, which might use a cellular phone type E-TACS 900 or similar.

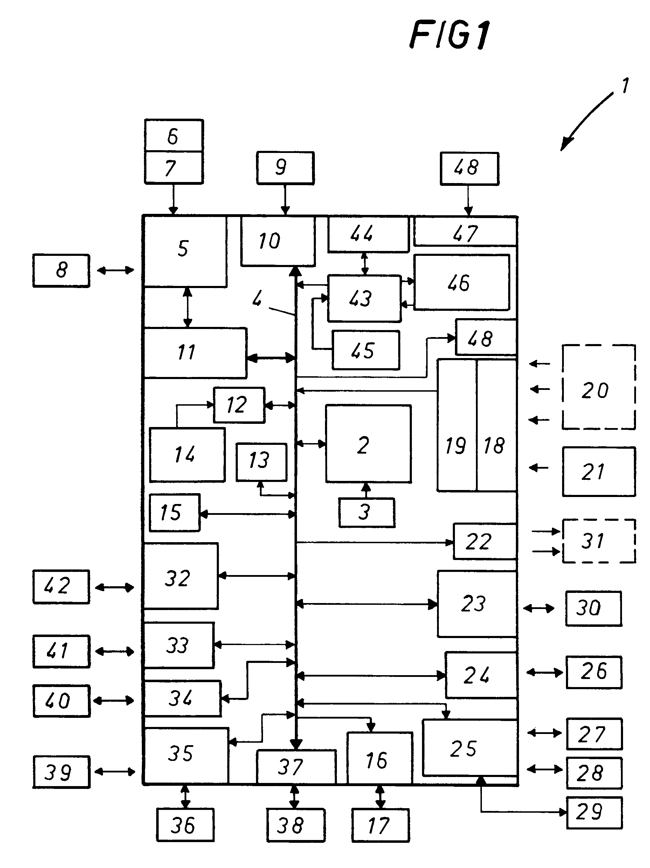

Referring to the drawings, fig 1 is a block diagram in which 1 denotes the circuit, in its entirety, of on-board equipment utilized in the system according to the present invention.

More exactly, the block diagram 1 represents the so-called "black box" of a vehicle using the system to which the present invention relates, that is to say, a mobile station interfaceable with satellite sensing devices. 2 denotes mobile control means consisting in a microprocessor, associated with its own independent oscillator 3, which controls and interacts with all further hardware in the box 1 by way of a relative bus 4.

In particular, such hardware will include storage media 12, 13 and 15 consisting in SRAM, PROM and EEPROM memory circuits, respectively, serving the processor 2. The SRAM 12 is also provided with its own backup circuit consisting in a battery 14.

Fig 1 also indicates a number of peripheral devices connected with the box 1, one of which being a GPS antenna 9 (designed specifically for use with the GPS system) of which the signals are supplied to a GPS receiver 10, thereby enabling satellite links.

A further interface denoted 5 handles all incoming signals, analog and digital, as well as piloting transmitter devices, thereby allowing dialogue with the world beyond the system, and in particular with fixed control means performing the function of a base station (likewise microprocessor controlled).

As indicated in fig 1, the interface 5 in question receives both analog input signals, denoted 6, and digital signals 7 of the type produced by inertia sensors such as accelerometers, compasses, etc.

8 denotes a plurality of transmitter devices as utilized typically in communications systems -viz, satellite, UHF/VHF radio, GSM and E-TACS cellular phones etc.

47 denotes a switch connecting the circuits of the box 1 to an external power supply 48. The switch is suitably protected in order to ensure safety during operation of the system.

11 denotes an electrical interface 11 through which the external interface 5 is connected, by way of the bus 4, to the microprocessor 2.

To advantage, the temperature of the mobile station is monitored and controlled by way of a temperature sensor 45, a relative control circuit 43 connected to the sensor, and a heater element 44 that can be activated to counteract low temperatures.

46 denotes a circuit by which the power supply can be stabilized and maintained steady in the face of fluctuating temperatures.

As regards other input signals, the box 1 comprises optoisolated inputs 18, of which the optoisolators are denoted 19, such as might be used for alarms or auxiliary (panel) power switching etc., denoted 20, also for alarm signals generated by a module 21 in conjunction with merchandise security packs.

The processor 2 also produces a diagnostics display utilizing Leds 49.

Again with diagnostics in view, 32 denotes a serial interface allowing the connection of a diagnostic terminal 42 utilized for set-up, down/up-loading data, programming if any, and sundry tests.

There is also specific interface circuitry 33 which can be used to expand the memory of the station, for example by connection to an external card 41.

A further advantage of the system disclosed is that it affords a facility for the verification of fares payable on public transport vehicles, operating in conjunction with an obliterator circuit 40 to be described in due course. A dedicated interface 34 is provided for the purpose.

The system disclosed is also able to pilot voice recognition and speech synthesis functions, by way of a dedicated interface 35 to which the relative microphones 39 and loudspeakers 36 are connected.

In the event that the bus 4 may lack the capacity to perform all the functions required, an expansion interface 37 allows connection to external devices denoted 38, which can be suitably personalized.

Output signals are supplied to an interface 16 driving an external display 17, and to a relay trip circuit 22 such as will activate theft alarms 31 and other similar devices.

A further serial interface 23 allows communication between the box 1 and an on-board terminal 30 with which the vehicle is equipped.

Advantageously, the system disclosed can also link up with a train data transmission system, and to this end comprises a dedicated interface 24 for connection to a train data bus, denoted 26.

Another interface 25 provides the connection to all external monitoring and sensing functions, such as ambient noise microphones 27 miniature television cameras 28 and other types of sensors 29.

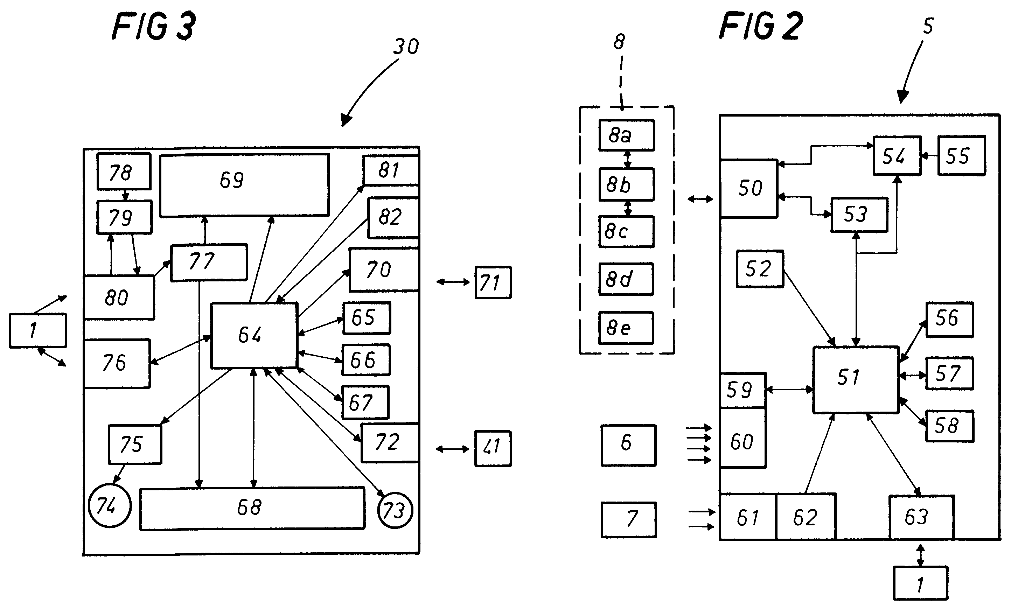

Fig 2 illustrates the component sub-assemblies of the interface denoted 5 in fig 1 which, as already intimated, enables the connection with external transmitter devices and the reception of analog and digital input signals.

The interface 5 comprises its own microprocessor 51 associated with a further independent oscillator 52 and relative SRAM, PROM and EEPROM memories denoted 56, 57 and 58 respectively.

In the example of fig 2, the microprocessor 51 is interfaced with a variety of external devices by way of a converter 53. The interface can be TTL or RS232 serial, which will enable connection both to a modem device 54 equipped with an oscillator 55, and to an RS232 serial line: impedance and levels will then be respectively adapted and adjusted by way of a special circuit 50 interfaced externally with devices such as satellite transmitters 8a, or fax machines 8b or cordless handsets 8c or VHF/UHF radio equipment 8d, or indeed any transmitter of whatever nature denoted 8e.

Incoming analog signals 6 are received through a dedicated interface denoted 60, whilst digital signals are directed through a further interface 61 equipped with counters and optoisolators 62.

Before reaching the microprocessor 51, the analog signals 6 must be converted to digital by an A/D converter 59.

Finally, communication between this section 5 and the remainder of the black box 1 takes place via a dedicated interface denoted 63.

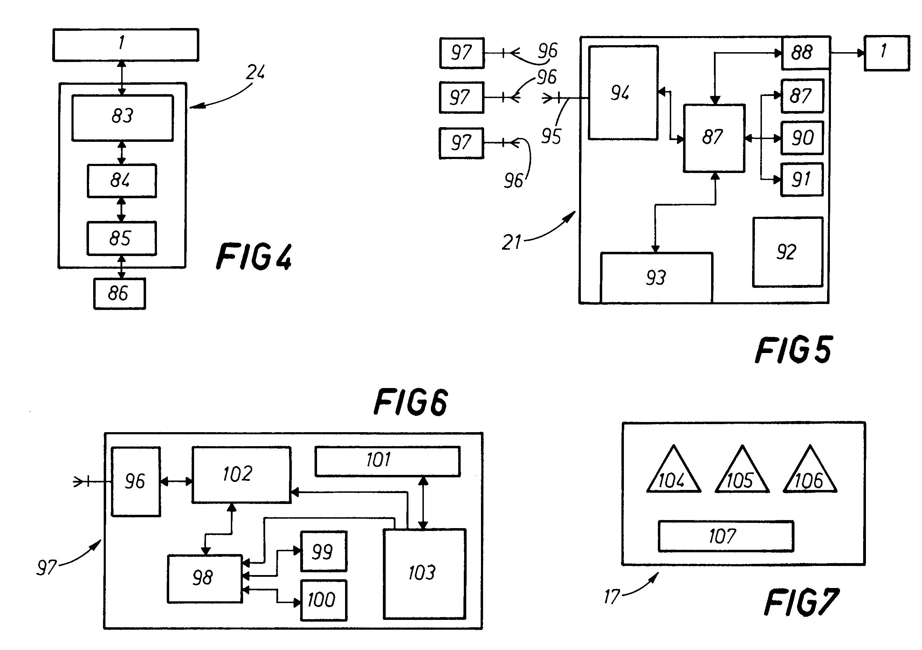

Fig 3 illustrates the on-board terminal 30 of the vehicle, already indicated in fig 1. In detail, the terminal is equipped with a microprocessor 64 and SRAM, PROM and EEPROM memories denoted 65, 66 and 67 respectively, also with a backlit alphanumeric display 69 and relative backlighting circuit 77.

The processor 64 is connected to a parallel port 70 allowing interface with printers or other auxiliary devices 71, as well as to an expansion interface 72 for an external memory card 41.

The on-board terminal 30 will further comprise an alphanumeric keyboard, likewise backlit, also a buzzer 73, speech synthesizers 75 and speakers 74.

Diagnostic functions are displayed by an array of Leds 81, and a light sensitive circuit 82 controls the level of illumination.

The terminal likewise incorporates a temperature sensor 78 operating in conjunction with respective power control and stabilization circuits 79 and 80.

Dialogue between the terminal and the black box 1 occurs through a relative serial interface 76.

As already intimated, the system according to the present invention can be linked up to a train data transmission system, and accordingly, the relative interface 24 connecting with the train data bus 26 comprises an interface circuit 83, a transmission data address circuit 84 and a suitable isolator 85 (see fig 4), coupled to the data bus 26 by way of connectors 86.

It is also envisaged that the system disclosed will operate in conjunction with "merchandise security packs". This involves the installation on board the vehicle of a module as illustrated in fig 5, which forms part of the peripheral block denoted 21 in fig 1.

The relevant circuitry includes a microprocessor 87 with RAM, PROM and EEPROM memories denoted 89, 90 and 91 respectively, which is interfaced with the box 1 by way of an I/O board 88. The module has its own power supply 92, and a range control circuit 93 through which alarms are triggered.

The processor 87 in question is associated with a transmitter-receiver 94, designed specifically for the purpose in question, of which the antenna 95 receives signals from the antennae 96 of further transmitter-receiver circuits 97 concealed within the load carried by a goods vehicle, as indicated schematically in fig 5, and designed to send out location signals over a certain range. Each pack circuit 97 in turn comprises a control processor 98 with RAM 99 and EEPROM 100, a power supply 101 and a dedicated battery 103, as well as a directional transmitter-receiver 102 from which radio signals are beamed to the aforementioned device 21 by way of the relative antenna 96.

Fig 7 shows one possible layout for an on-board display 17 connected to the black box 1. By way of example, 104 denotes an alarm indicator, 105 a fog warning indicator, and 106 a further indicator of which the function can be selected by the user.

107 is a luminous field indicating the approximate distance that separates the vehicle from a hazard.

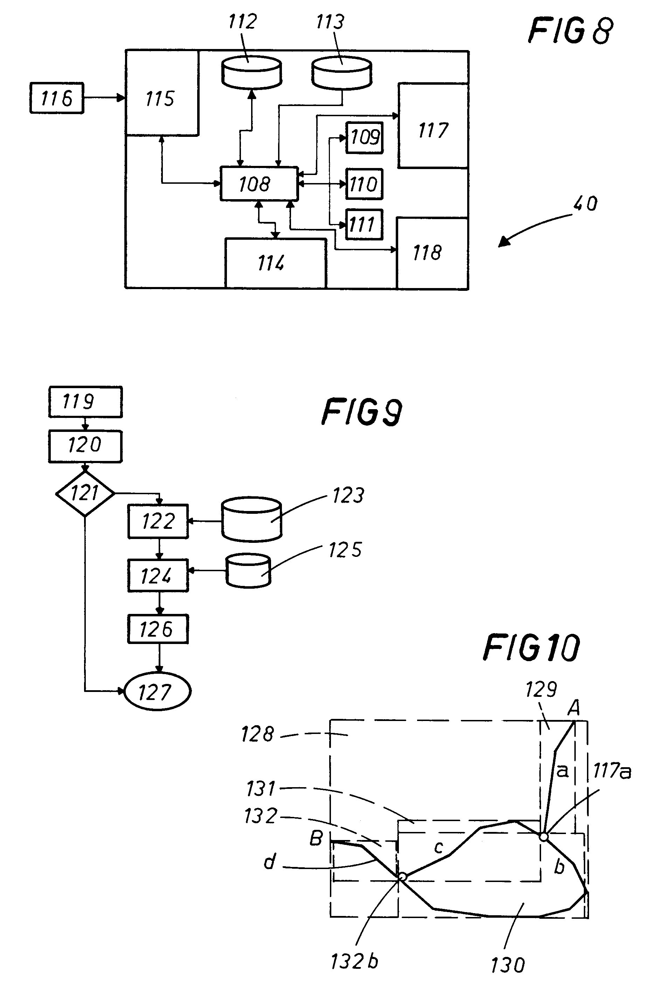

Fig 8 illustrates the obliterator circuit 40, which comprises a processor 108 with relative RAM, PROM and EEPROM memories respectively denoted 109, 110 and 111.

The processor has its own database 112 from which to identify the line or route, also a database 113 in which stops and fare stages are stored.

An expansion facility is provided in the form of an interface denoted 114, allowing connection to other obliterators, whilst a further interface 117 allows dialogue between the processor 108 and the box 1. The circuit 40 has its own power supply 118.

115 denotes the input section of the obliterator, namely a user-operated read-write device into which prepaid tickets 116 are insertable.

The operation of the obliterator circuit 40 will be described in due course.

Having outlined the general structure of the system in the specification thus far, there now follows a description of its operation, in which reference is made to the flowcharts included in the drawings.

Operating through the black box 1 of a vehicle, the system according to the present invention allows initially of converting geographical and geodetic coordinates used in any type of map representation system that may be adopted in countries encountered along the route, i.e. in the event of the vehicle crossing state frontiers.

The flowchart of fig 9 illustrates discrimination means programmed to perform the steps of a method for conversion of the aforementioned coordinates.

The hardware components involved in the conversion process are those pertinent to the GPS antenna 9, to the inputs 6 and 7 handling analog and digital signals and to the various transmitter devices 8, all of which are accessible to the processor 2 by way of the bus 4, receiver 10 and interface 5, so that the required conversion can be made.

Referring to fig 9, a first step 119 indicates the acquisition of position data received via the GPS antenna 9 and from the analog and digital signal inputs 6 and 7.

A second step 120 consists in filtering the data picked up via the GPS antenna 9 according to the route. Thereafter, the historic position and speed value is determined. The next step is a decision step 121 in which the system asks if the conversion is necessary or otherwise.

If conversion is required, the program will branch to a step 122 that determines where the vehicle is currently situated, referring to acquired position data and to the relative traverse. For the purposes of this step, the data to be processed, relative to the zone (frontiers, regions, areas, etc.), will be retrieved from a corresponding database 123.

This is followed by a first conversion step 124, applying an algorithm representative of the zone and of the criteria selected by the user, which is supplied by a further database 125.

126 denotes the step proper in which geographical coordinates are converted to map representations, thus completing the function. If the result of the decision step 121 happens to be that no conversion is required, the program proceeds straight to a terminal step 127, which consists in reinstating and storing the existing geographical coordinates. Throughout the execution of these steps, computing operations are performed by the main processor 2, whilst the pertinent variables and data are saved in SRAM 12. Codes and other data are stored in the relative PROM 13.

As to the procedure for controlling deviation, i.e. a possible departure from a set route, the system disclosed is able, within a certain programmable tolerance, to detect any instance of the vehicle straying off course and to generate a corresponding alarm signal. The procedure will normally come into operation by assuming a pre-alarm condition, with an active response being triggered only on crossing a given threshold (programmable), and then simply to provide a warning; clearly, this will avoid the eventuality of confusing messages being generated fruitlessly for minor or momentary departures from the set route. To optimize control, the criterion adopted is one of dividing established routes into a given number of subroutes. Each such subroute is associated with a delimiting rectangle. Naturally, the territorial deviation of a vehicle is detected as a departure from a prescribed territorial area.

The diagram of fig 10 represents a route from a point denoted A to a point denoted B, both of which located within a rectangular area denoted 128.

A number of subroutes a, b, c, and d are indicated, compassed by corresponding rectangles 129, 130, 131 and 132 within the main rectangle 128.

More exactly, the overall route comprises two legs joined at intersections denoted 117a and 132b. The diagram illustrates how the set route is divided into subroutes and how the delimiting rectangles are plotted.

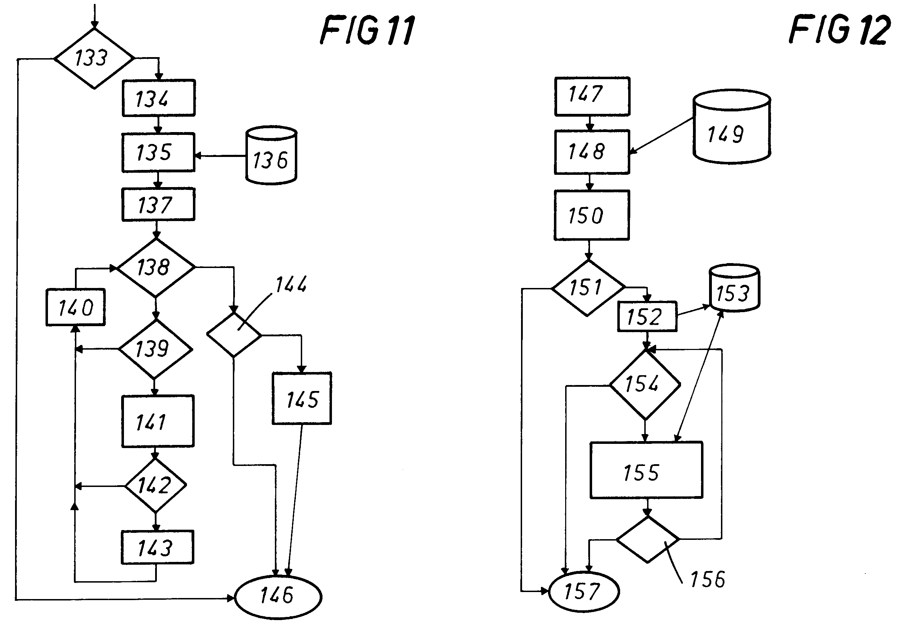

Fig 11 indicates the steps of the deviation control program.

In an initial decision step 133, the system asks whether or not the deviation control procedure is to be executed.

If not, the control program returns to the terminal step 146, i.e. to the top of the main programmable cycle.

If control is required, on the other hand, there follows a first processing step 134 which includes the acquisition of filtered data from the GPS and from other inertia monitoring systems.

In the next step 135, the set route from which to detect any possible deviation is retrieved from a permissible routes database 136.

The first subroute is now processed in step 137.

The following decision step 138 cheeks that this and each successive subroute has been successfully processed; if so, the program branches to a further decision step 144 serving to determine whether or not the vehicle is correctly on course. If all is as it should be, then the program returns to the terminal step 146; if not, there is another branch to step 145, and an alarm signal will be triggered to indicate a deviation.

Until the last of the subroutes has been processed in step 137, the program will proceed from step 138 to step 139, which establishes whether or not the vehicle is within the delimiting rectangle plotted for the subroute in question; if not, the program branches to a further processing step 140, and in fact to the next subroute. A positive outcome at step 139 leads to step 141 in which, referring to the position last defined, the program computes its relationship to the subroute to allow of verifying whether or not the resulting drift is acceptable or otherwise. If the outcome is affirmative, i.e. the value falls within the tolerance allowed by a further decision step 142, then the vehicle is on course and the drift considered minimal, as confirmed in a further step 143. If not, the program branches to step 140 and processes the next subroute.

Likewise in this instance, the components of the box 1 involved in the function are the processor 2 and the relative oscillator 3, all RAM and ROM memories 12, 13 and 15, the GPS receiver 10, the data and internal interfaces 5 and 11, and all of the digital inputs 18 connected to the peripheral devices denoted 20 in fig 1.

Given that the information storage capacity of the system is not particularly large (for reasons of cost, bulk, etc.), the need arises to optimize the historical memory periodically so that a coherent picture of the various routes is maintained.

To this end, the processor 2 exploits a space-time algorithm to organize positions intelligently, anticipating when total saturation of the memory is likely to occur and compacting or deleting data relative to any intermediate positions among those recorded in order to avoid such a situation.

The optimization parameters conventionally applied are: the maximum length of the segment between two consecutive points; the maximum acceptable angle between two straight lines connecting three points, and the straight line obtained by eliminating the middle point of the three; also maximum tolerance and maximum permissible error.

Fig 12 illustrates a program flowchart relative to such a memory optimization facility in the system according to the present invention.

147 denotes the initial step of acquiring new data by way of the GPS antenna 9 and analog/digital signal inputs 6 and 7. In the following step 148, the space-time algorithms used for the optimization procedure are retrieved from a relative database denoted 149.

The successive step 150 is a computation, effected on the basis of the selected algorithm and of the acquired input data, serving to establish whether or not the new position needs to be stored in the database. The question is resolved in the following decision step 151: if negative, the program jumps straight to the terminal step 157; if affirmative, the next step 152 will be to save the position in the acquired routes database 153.

The following step 154 is another decision serving to check the current size of the database: if the database occupies less than 90% of the available storage capacity, the program proceeds straight to the terminal step 157; if more than 90%, then there will be a further step 155 in which the processor changes the optimization parameters, increasing the compaction factors and reviewing the positions in the database to the end of eliminating the least significant.

A final decision step 156 establishes whether or not further compaction is necessary. If yes, the program goes back to step 154, and if no, forward to the terminal step 157.

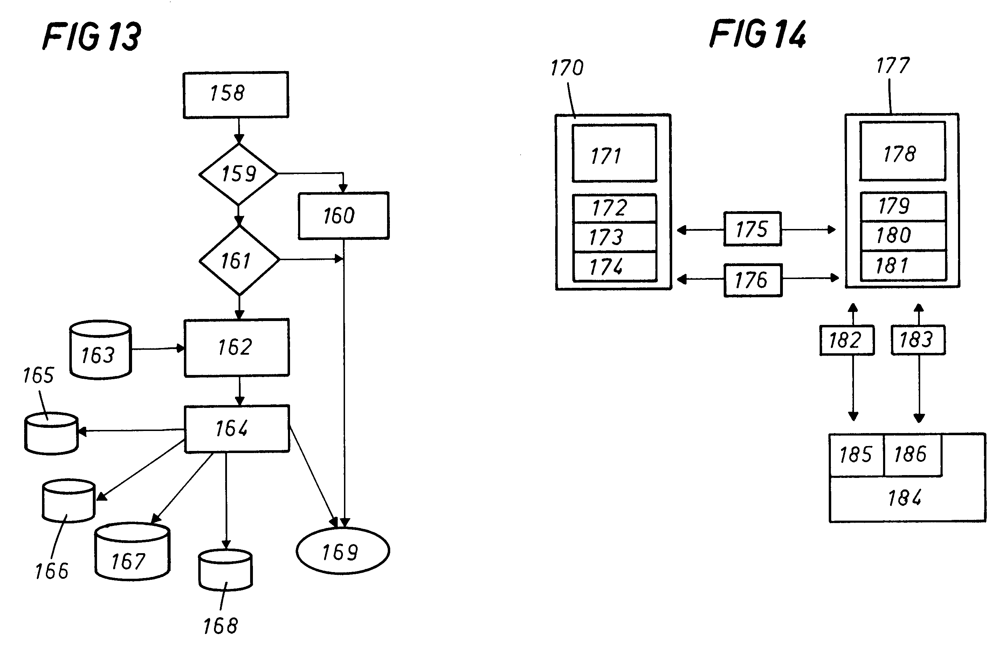

Fig 13 shows a flowchart of the self-configuration procedure whereby every item of data in the SRAM 12 and PROM 13 of the box 1 is handled and allocated dynamically.

The first step 158 of the procedure is a routine that will be executed either at initialization or when the user makes any alteration to the operating parameters of the system. Thereafter, a decision step 159 determines whether or not the system has been set up functionally.

If so, a subsequent decision step 161 establishes whether the configuration is the same as before or different. If the same, the program passes directly to the terminal step 169. If different, the next step 162 will be retrieval of the memory allocation characteristics from a database 163 containing the set-up configurations for the system.

There now follows a reconfiguration of the memory in step 164, whereby all previous data and previous dimensional updates to the system are erased. This is followed by a reorganization of the permissible routes database 165, the messages data base 166 and the database 167 containing routes acquired by way of the GPS and inertia systems, and reconfiguration of all other databases 168 of whatever nature.

If, conversely, no set-up is found at step 159, the program branches to a processing step 160 that will result in the adoption of a default configuration.

Advantageously, to safeguard the secrecy of data and of the transmissions between the mobile station and the base station, also between base stations, the system provides for inclusion in the on-board equipment of a plurality of algorithms serving for the encryption of data and the exchange of keys. Three encipher keys are envisaged, each a function of the level of protection required in respect of the information.

A first "master" key is used for the communication of "secondary" keys between the different base stations making up the system.

A secondary key is utilized to encipher the data transmitted between base stations or to determine the re-encryption of third, or "peripheral" keys transmitted to on-board mobile equipment used in the system.

The "peripheral" key is used for enciphering all communications between different on-board equipment and base stations. Considering that the quantity of data to be communicated is substantial, each key will be changed periodically according to the level of security the user wishes to obtain.

In practice, the master key and the secondary key are utilized only on rare occasions, whereas more frequent use is made of the peripheral key, or indeed of several peripheral keys simultaneously. The peripheral key is used in the transmission of all information between base and mobile stations, and as this flow of information is considerable, the keys need to be changed frequently. All base stations must recognize the master key, whilst all mobile stations must recognize the secondary key and the peripheral key.

The block diagram of fig 14 shows a configuration whereby the management of encryption functions, using the aforementioned keys, can be handled by the system disclosed. Blocks 170 and 177 denote two fixed or base station assemblies, in which 171 and 178 respectively are the stations proper, utilizing sets of "master", "secondary" and "peripheral" keys denoted 172-173-174 and 179-180-181 respectively.

Data transmissions between the base stations 171 and 178 are enciphered using a secondary key 176, as already intimated.

175 denotes a further communications link utilizing a secondary key, which in turn is controlled by a master key.

Block 184 is a vehicle in radio communication with the base station denoted 178; blocks 182 and 183 denote the transmitted data and a peripheral key, respectively.

On the vehicle 184 itself, block 185 represents the data interface 5 of the black box 1, and block 186 the box proper.

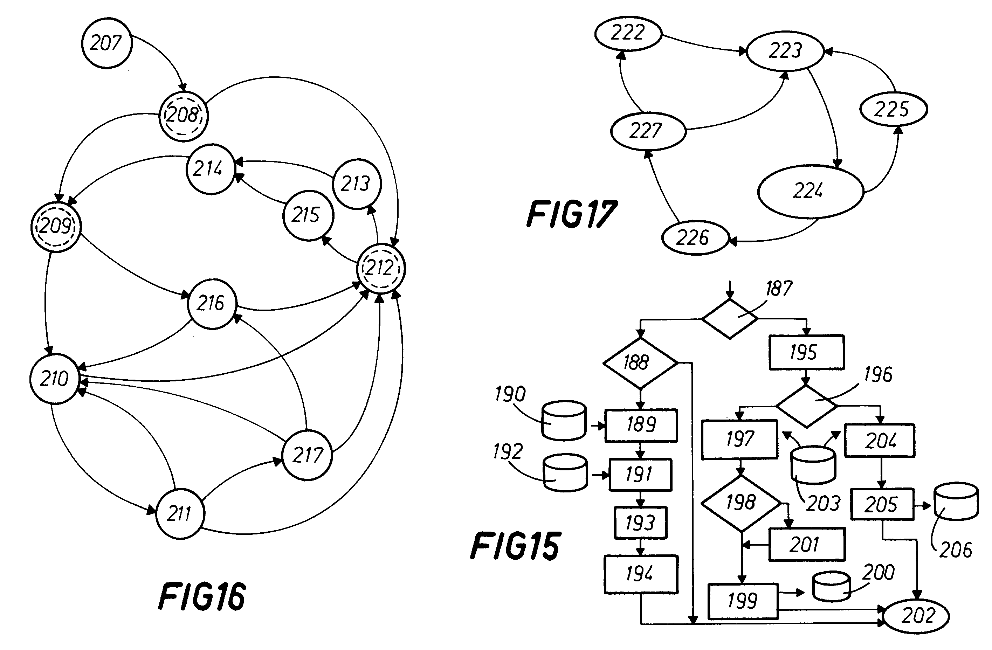

Fig 15 illustrates a flowchart relative to the management of the master, secondary and peripheral encryption keys used in transmission and reception.

The initial decision step 187 serves to establish whether or not any message or command has been received. If not, the program branches to step 188, which establishes whether or not there is a message or command to be transmitted. If not, the program proceeds directly to the terminal step 202.

Should it emerge from step 188 that there is indeed a message or command, the next step 189 is one of retrieving the information to be transmitted from a relative database 190. There is then a similar step 191 in which data relative to the peripheral key will be retrieved from a set-up database 192.

Next is the step 193 of encryption proper, then the step 194 of relaying the encrypted message to the interface 5 of the black box 1 for transmission. Thereafter, the program returns to the terminal step 202.

Should step 187 reveal that there is an incoming message/command, the program branches to step 195, denoting acquisition of the message by the box 1, via the interface 5. Following acquisition, there is a decision step 196 serving to establish what type of message/command has been received. If the communication is a command to generate a new key, the program branches to step 197 in which secondary and peripheral keys are retrieved from a set-up database denoted by block 203.

Following step 197, a further decision step 198 establishes whether or not the peripheral encipher key is the same as that of the system in question. If yes, the program branches to step 201 in which the current peripheral key is replaced with a new key. If no, the next next step 199 will be one of updating the database with the information that the system encipher key has been changed. Thereafter, this same replacement is made in the database 200 containing the listings of keys.

If the result of step 196 happens to be that the incoming communication is a message rather than a command, then the program branches to step 204 in which the peripheral key required for deciphering purposes is retrieved from the database 203. In a further processing step 205, the newly received messages are saved and copied to a database 206, after which the program returns to the terminal step 202 and therefore to the top of the program.

Fig 16 is a diagram illustrating the temperature control method as utilized by the system disclosed.

In this diagram, the arrows drawn with continuous lines indicate transitional states attributable to external factors, whereas arrows drawn with phantom lines indicate actions brought about operationally. A plain circle represents a stable state, that is to say, a state which once established will remain unaltered until such time as the action indicated by an associated arrow brings about a transition.

A bold circle enclosing a phantom circle indicates a transitional and therefore nonstable state.

At the outset, the system will be in the condition denoted 207. When power is supplied to the system (main switch operated by the user), a nonstable state 208 is produced in which the temperature is sampled and, according to whether or not the value falls within a permissible range, the control can assume state 209 or state 212.

In almost all the operational states indicated by the diagram, a temperature value falling outside the permissible range will trigger state 212, which may be considered as the point of departure and/or coordination for correcting or responding to high or low temperatures.

In state 209, with the temperature correct, the system checks whether or not the vehicle ignition signal is active; if so, state 210 is assumed, if not, then state 216.

210 denotes a fully operational state which will be maintained either until the system is switched off, inducing state 211, or until a temperature value outside the permissible range triggers state 212.

In state 211, the processor activates a timer that will ultimately switch off the GPS antenna 9 and the black box 1 itself, though in practice any of the following events may occur: reinsertion of the key in the panel, restoring the power-up condition of 210; expiry of the time lapse for deactivation of the GPS link, producing state 217; or high/low temperature triggering state 212.

In state 217, hence with the GPS link switched off, one of the following events will occur: expiry of the time lapse for switching off the black box 1, resulting in state 216; reinsertion of the key to restore the power-up condition of 210; high/low temperature triggering state 212.

In state 216, the box 1 having switched itself off, either one of two events can occur: the vehicle is restarted, restoring state 210, or a high or low temperature value triggers state 212.

212 is a transitional state, as aforementioned, in which the system verifies whether the temperature is above the maximum threshold (triggering state 215) or below the minimum (triggering state 213).

In state 213 (temperature too low), the heater cuts in automatically and stable state 214 is assumed until the temperature returns within the prescribed range. In state 215 (temperature too high), the system switches itself off automatically to ensure safety, and stable state 214 is assumed until the temperature returns to normal.

Fig 17 is a diagram indicating the manner in which power consumption is managed and/or optimized by the system disclosed.

222 and 223 denote the system respectively in the "off" condition, and in the activated and fully operational condition.

If for any reason the ignition key is switched off, the system passes to a condition 224 in which, with the key removed, it assumes the vehicle logically to be at a standstill (zero rpm) and will thus set the timer to deactivate the various sections of the equipment.

The system is brought out of condition 224 either by the user reinserting and operating the ignition key, in which case the timers are reset and normal functions resumed (indicated by 225), or, if the delay programmed for deactivation of the satellite link has elapsed, by a move to condition 226 in which the GPS antenna 9 is switched off.

227 denotes a condition in which the system remains on, with the GPS link switched off, and two events are possible: reactivation by inserting and turning the ignition key (restoring the fully operational condition 223), or expiry of the time lapse set for deactivation of the box 1 and a return to the "off" condition 222.

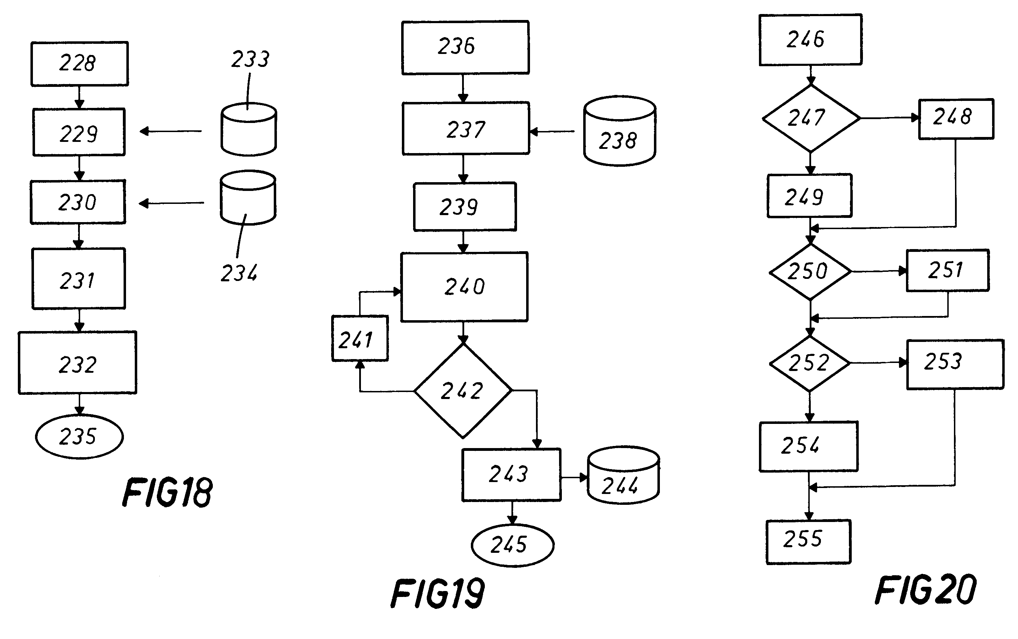

Fig 18 illustrates an algorithm utilized to force a fix sensed by way of the GPS antenna 9 and inertia systems 6, to the end of enhancing the precision of the available map information.

More exactly, step 228 consists in the acquisition of a position sensed by way of the inertia systems or the GPS antenna 9.

The next step 229 is search and acquisition, from a relative database 233, of the map reference for the neighbourhood of the position in question.

This is followed by the step 230 of comparing the current route with the corresponding mapped route, referring to an acquired routes database 234.

At this juncture, any difference in position will be verified (step 231) to establish whether there is any need to incorporate the acquired position into the corresponding map information.

This is followed by a step 232 of identifying the map segment so as to allow its use in successive modules.

The remaining terminal step 235 marks the end the cycle, the map reference and the acquired routes databases 233 and 234 having been updated.

Another advantageous facility offered by the system disclosed is that it allows of obtaining a form of data such as can be utilized immediately in a map context, i.e. as coherent and accurate segments and not simply discrete positions.

The solution in question is one of digitizing the cartographic data, compiling a sequence of latitude and longitude coordinates which are then converted vectorially by the relative information media into map segments suitable for use in radiolocation and radionavigation applications. In effect, this is an automatic batch processing operation that commences with the acquisition of positions by way of the GPS antenna 9 and terminates with the output of a file that can be reutilized immediately for cartographic purposes.

Fig 19 illustrates the vector algorithm used in the automatic digitization of map segments thus briefly outlined above.

Observing fig 19, the algorithm will be executed according to the data requested by the user in an initial step 236. The next step 237 consists in a statistical analysis of the acquired data, that is to say, an operation determining the mean and the variance of the times needed to cover the distance between the known positions, using data retrieved from an acquired route database denoted 238. In a further step 239, the least significant positions are eliminated from the list.

This is followed by a step 240 of determining the best possible line between the acquired positions, which is a function of the number of segments, and the standard deviation between the points of origin and the approximate line.

Thereafter, there is a decision step 242 serving to establish whether or not the resulting line gives the best possible approximation. If not, there will be a return to step 240 via a correction step 241 in which the computation parameters are adjusted. If yes, the subsequent step 243 is one of saving the sequence of digitization vectors for the user's future reference, and accordingly, the sequence is copied to a database 244 in which all vectorized versions of acquired routes are stored. This brings the program to its terminal step 245.

As already intimated, the black box 1 will further comprise an interface 25 allowing interaction with television cameras 28. Since the system disclosed also provides for the integration of a miniature TV camera circuit to enhance the images sent out from the mobile station, means are naturally required by which to handle the video signal received from the camera. The signal is processed on board initially, then transmitted by way of the interface 5 and the relative transmitter device 8.

Clearly, there will be a series of filter stages, piloted by the processor 2, which serve to reduce the complexity of the image. The TV camera itself might be activated automatically by a crash sensor designed to operate in the event of the vehicle being involved in an accident or braking suddenly.

Fig 20 illustrates a flowchart for the function in question which, along with the relative external devices, involves the processor 2 and the relative oscillator 3, and the interfaces 5, 11 and 25.

The initial step 246 consists in the acquisition of an image from the digital TV camera.

The next step 247 is one of testing the contrast of the image; if the contrast is strong, the program branches to a step 248 in which the correct balance is restored; if weak, the following step 249 will be to heighten the contrast.

With the contrast as required, a second decision step 250 will verify the definition of the image. If the outline is indistinct, the program branches to step 251 and the definition is strengthened; if acceptable, the next step 252 is one of quantifying the level of black and white in the image.

If the level registers as low, the program branches to step 253 and the image will be compressed by applying low level correction algorithms; if high, the program proceeds to step 254 in which the image is compressed by applying high level correction algorithms. In the final step 255, the image is adjudged acceptable and can be recorded.

Advantageously, the system disclosed can also be used to check the fares payable in public transport vehicles, exploiting the aforementioned obliterator interface 34 and the relative circuit 40.

In this instance the ticket obliterator of a public transport vehicle is associated with a satellite receiver capable of indicating the position that a suitable built-in microcomputer will force on the coordinates of the route stop, in such a way that the stop can be identified unmistakably. In this way, the fare payable by the passenger can also be determined. In effect, the payment can be effected automatically using a system designed to recognize smart cards or to discount tickets purchased in advance.

The consequent benefit to a company or authority operating a public transport service is the exact accountability obtainable in respect of individual lines or routes, i.e. profitability of the service verifiable by statistical analysis.

The GPS antenna 9 also provides extremely precise time information, and accordingly, the link between obliterator and GPS antenna permits of dispensing with the need for manual resynchronization of the obliterator clock, thus saving time on maintenance and guaranteeing a better service to customers who purchase travel cards for use on different modes of transport.

To advantage, the black box 1 is able to link up with positioning data furnished by a system dubbed CCN Train Communication Network, which is in the process of standardization with the IEC (DG9 DG22) and currently designated IEC9SEC332. The network in question allows of providing information relative to an entire railway train, making data available to all on-board user devices, monitoring guidance, systems, passenger information, etc.. The system utilizes the GPS receiver 10 and the interface 24 connected with a train data bus 26. In this way, the black box 1 can receive and decode discernible signals picked up from satellites by way of the GPS antenna 9, then calculate the coordinates relative to their position and thus establish the current position of the train. The system then proceeds to perform the appropriate corrections and conversions of coordinates with reference to a map of the rail network, stored in local memory, and to additional information furnished by the inertia navigation system. The final coordinates determined in this manner are held in a buffer for transfer through the interface 5. The train data interface 24 will then automatically broadcast the information to all devices on the train in question. Thanks to the concentration of the location functions, the items of equipment to be installed in the train can be integrated more reliably into o single system.

To advantage, the system disclosed incorporates an on-board voice recognition facility, utilizing the interface denoted 35. The hardware also comprises a system of microphones 39 able to pick up the spoken command given by the driver of the vehicle, and a loudspeaker 36 through which the system emits the audible signal enabling voice control. Recognition proper is effected by applying voice processing and recognition algorithms on the basis of which the phonemes are analyzed and compared with a resident database stored in the PROM memory 13 of the black box 1.

Finally, there is provision for the inclusion of a car collision avoidance system, designed to assist the driver in conditions of reduced visibility; the presence of a hazard in the path of the vehicle is detected by conventional sensing means, whereupon deceleration sensors and a tachometer connection come into operation to signal the presence of the hazard by generating a visual and acoustic alarm, while indicating the distance from the danger area. Such a system will detect obstacles within a radius of one kilometre forward of the vehicle.

Naturally, the hazard information might also be fed to intelligent roadside columns which in turn will be able to relay the selfsame information across a wider area. The collision avoidance system could also interact with other types of device such as "Sicurvia" or "Infodrive" capable of rebroadcasting acquired information in the neighbourhood of other approaching vehicles.

To advantage, the essential elements of the box 1 can also be packaged for personal use and carried by an individual, as discernible from the example of fig 1, in which 256 denotes a portable handset housing a cellular type transmitter device 258 (UHF/VHF radio and satellite versions are also envisaged), also a mobile unit 257 equivalent to the mobile station of a vehicle, affording an alarm button 261, also a call button 259 and a warning button 260. The handset can also be connected to a fixed antenna by way of first connectors 264, to an external antenna by way of second connectors 265, and with the battery of a vehicle by way of further connectors 263. A power supply/battery charger 262 is also incorporated.

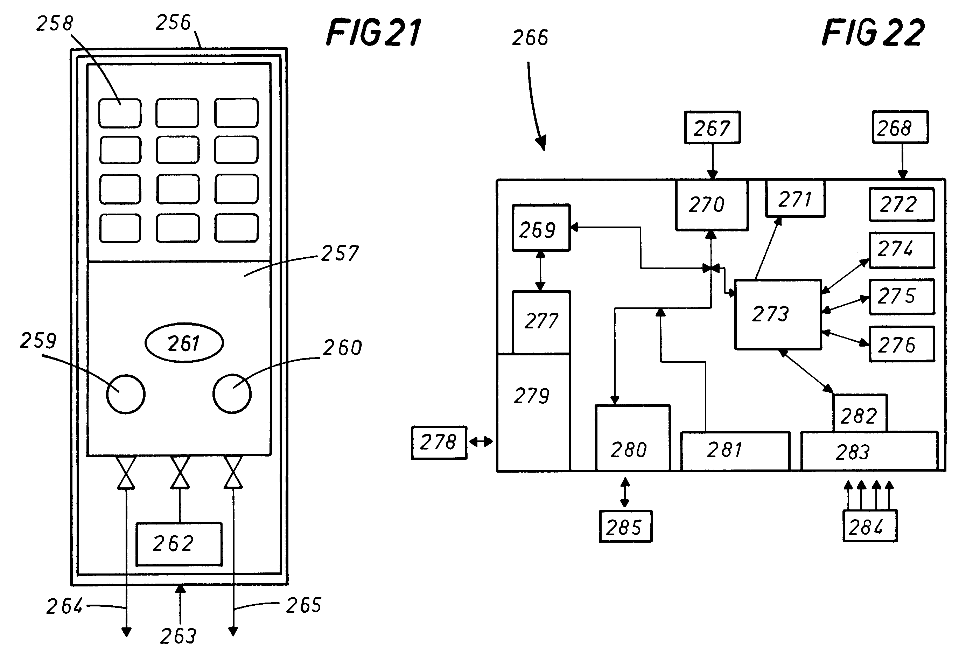

The appliance of fig 21, which naturally would be used as a pager, comprises an assembly of elements denoted 266, in their entirety, in fig 22.

Taken individually, 273 denotes a microprocessor, 274, 275 and 276 are SRAM, PROM and EEPROM memories respectively, 272 is the handset battery, and 268 a battery charger (built into the casing of a vehicle version, or detached, for a personal office or home version). 271 denotes the on-board diagnostics, which are displayed by indicator Leds. 267 denotes a GPS antenna and 270 a differential GPS interface. A TTL serial port enables the connection either to a modem device 269, by way of relative impedance adaptors and level controls 277, or, directly, to a conventional or cellular radio or fax device or to a satellite transmitter device 279. Such a device provides the interface with an external cellular antenna 278.

280 denotes an interface allowing communication with a diagnostic terminal 285, and the portable appliance might also have a simplified keypad 281. Finally, 282 denotes an A/D converter by which digital input data 283 is obtained from relative analog signals 284.

In the particular case of a paging handset, there is also the option of incorporating accelerometers and/or altimeters which, utilizing special software loaded into the PROM of the processor 2, will allow of directing the movement of a person backward or forward in places where signals can no longer reach the GPS receiver, for example as in the entrance to a tunnel. In this instance, use will be made of a Kalman filter, that is, a special digital filter capable of processing sampled numerical signals and designed specifically to reduce estimation error. In this type of application, the handset will be carried by the person being located. The objects stated at the outset are thus realized according to the present invention. In effect, the system disclosed can be utilized to locate a mobile station or a person in movement at any given point, since identification of the local map reference is highly reliable, even when crossing state borders, and a variety of special signals can be received (alarms, deviation from route, loss of position, etc.). Other parametric and circuit variations are possible, naturally, all of which falling within the scope of the appended claims.

## Claims

1. A system for the radiolocation and radionavigation of mobile means moving across national territorial frontiers, of the type comprising mobile interface means connected with satellite sensing equipment installed on board a vehicle, mobile memory means connected to the mobile interface means and serving to store map representations, mobile control means controlling the interface and memory means, fixed control means controlling the mobile means, and transmission means by which signals can be passed between the fixed and mobile means,
**characterized**
in that the fixed control means also control the operation of discrimination means serving to bring about the conversion of geographical and geodetic coordinates, retrievable from the mobile memory means, into map representations relative to each of the national territories across which the vehicle may be in transit at any given moment.

2. A system as in claim 1, wherein the discrimination means are programmed to execute a procedure that comprises the steps, in sequence, of: acquiring position data received through a satellite antenna connected with the mobile interface means, also data furnished by a variety of analog and digital input signals; filtering the data received by way of the satellite antenna; determining whether or not the conversion of such data is required, and if required, proceeding to determine in which zone the mobile means are currently located, on the basis of position data retrievable from a database allowing identification of the frontiers of territories en route, and by reference to the relative traverse; thereupon, effecting a preliminary conversion by applying an algorithm pertinent to the particular zone and based on criteria selected by the user; and finally converting the acquired geographical and geodetic coordinates into map representations of the identified territory.

3. A system as in claim 1, wherein the interface means consist in circuits able to link up with satellites of the Global Positioning System.

4. A system as in claim 1, wherein memory means are provided by SRAM, PROM and EEPROM storage media.

5. A system as in claim 1, wherein the control means consist in microprocessors.

6. A system as in claim 1, wherein transmission means consist in satellite or telephone or radiofrequency communication devices.

7. A system as in claim 1, wherein the mobile control means are equipped and programmed to monitor and control the temperature of the mobile station by way of a temperature sensor connected to a relative control circuit, and a heater element such as can be activated in response to low temperature values.

8. A system as in claim 7, wherein the mobile control means consist in a microprocessor programmed at least to execute a temperature monitoring and control procedure commencing with passage from an initial state to a nonstable state in which the temperature is measured to determine whether or not the value falls within prescribed limits, whereupon if the value is outside the permissible range, an intermediate state follows in which the high or low temperature is corrected, or if within the range, the processor verifies whether or not the system is in the power-up condition, and if the system is not powered up and the temperature falls within the permissible range, power is supplied and the system remains operational until deactivated by the user, thereupon entering a first deactivating state in which a timer is set to switch off the satellite link after a first delay, and thereafter a second deactivating state in which the same timer remains programmed to switch off the system itself after a second delay, the temperature also being monitored throughout, and, if registering below or above the permissible range, respectively returned or allowed to return to normal in a further and final stable state.

9. A system as in claim 1, further comprising an obliterator circuit with a relative interface for the management of fares payable on public transport vehicles, wherein the circuit is connected to the antenna of a receiver linked up to satellites of the Global Positioning System.

10. A system as in claim 1, further comprising a train data transmission interface allowing connection to a train data bus, thereby enabling communication between the mobile interface means, linked with satellite equipment, and a moving railway train.

11. A system as in claim 1, further incorporating a terminal installed on board the vehicle, comprising a microprocessor with relative memory circuits, a backlit alphanumeric display and a keyboard, by means of which the user of the vehicle can enter data for the configuration of the system.

12. A system as in claim 1, wherein the mobile control means are interfaceable with a module comprising a microprocessor and relative SRAM, PROM and EEPROM memory means, a transmitter-receiver connected to the microprocessor, and an antenna in receipt of signals which are emitted by a plurality of remote transmitter-receiver circuits, associated with respective antennae and concealed in packs stowed amongst the merchandise transported by a goods vehicle, and which can be picked up as long as the mobile means remain within a prescribed range of the concealed transmitter-receivers.

13. A system as in claim 1, wherein the control means are designed to detect and signal any deviation of a vehicle from a prescribed main route by executing the steps of a procedure based on the division of the main route into a plurality of subroutes.

14. A system as in claim 13, wherein the procedure of detecting deviation from a route comprises the successive steps of: determining initially whether or not detection is required, and if not, returning to a programmable starting point, or if required, proceeding with acquisition of the coordinates for the current position from satellites of the Global Positioning System, received by way of a relative antenna, and from other inertia input devices; then accessing a database of all permissible routes and retrieving that pertinent to the main route from which deviation might occur; thereafter, processing a first subroute, processing further subroutes, and on the basis of the results obtained, determining whether or not the vehicle is exactly on course and, if on course, returning to the starting point, or if not, activating an alarm signal to indicate deviation from the route; or alternatively, if a deviation is detected but considered still to be within the margins of tolerance programmed for the subroute, processing a successive subroute and determining whether or not the position is still within the corresponding margins of tolerance, and if so, then adjudging the deviation to be minimal, processing the next subroute, and so forth until the vehicle is on the prescribed route.

15. A system as in claim 1, wherein the control means are programmed to optimize the storage capacity of the memory means by compacting stored data so that space is made permanently available to accommodate further data.

16. A system as in claim 1, wherein the control means are programmed to utilize three encryption keys, namely master keys, secondary keys and peripheral keys, to ensure the secrecy of transmitted data.

17. A system as in claim 1, wherein the fixed control means are programmed to execute a sequence of steps whereby communications transmitted and received are enciphered utilizing three encryption keys, namely master, secondary and peripheral keys.

18. A system as in claim 1, wherein the fixed control means are programmed to utilize data relative to map positions made available in a digitized form as the result of converting the positions into map segments by the application of a vector algorithm.

19. A system as in claim 1, further comprising a voice recognition device installed on board a vehicle, utilizing microphones capable of picking up a vocal command enunciated by the driver and a loudspeaker from which to emit a signal enabling voice control, and operating in conjunction with means by which the voice is subjected to a preliminary analysis and compared with phonemes stored in a resident database located at the fixed control means.

20. A system as in claim 1, further comprising a car collision avoidance system utilizing sensors and a tachometer connection by means of which to indicate the presence of an obstacle within a radius of one kilometre forward of the vehicle.

21. A system as in claim 1, wherein the mobile means are packaged for personal use and carried or worn by an individual, with the mobile interface means connected to conventional radio or cellular radio transmitter or satellite devices and equipped with alarm and warning buttons such as will permit of indicating the presence of the carrier or wearer, especially in situations of danger.

22. A system as in claim 21, wherein the mobile means packaged for personal use comprise a microprocessor with relative memories, and a differential Global Positioning System interface allowing connection to satellite or other devices and with accelerometers, thereby enabling external communications links, so that the position of the carrier or wearer can be located when moving both forwards and backwards.

23. A system as in claim 22, wherein the interface means of mobile means packaged for personal use comprise a digital Kalman filter for processing sampled numerical signals.
